# EUROPEAN PATENT APPLICATION

(11) **EP 1 598 606 A2**
(43) Date of publication of application: **23.11.2005**
(21) Application number: 05101809.1
(22) Date of filing: 09.03.2005
(51) Int. Cl.: F24F 11/00

(54) **Air conditioner and method for controlling operation thereof**

(30) Priority: 21.05.2004 KR 2004036522
(71) Applicant: LG ELECTRONICS INC., Seoul (KR)
(72) Inventor: Lee, Won-Hee, Seoul (KR); Hwang, Yoon-Jei, Yongsan-Gu, Seoul (KR); Song, Chan-Ho, Gyeonggi-Do (KR); Hyun, Seung-Youp, 6-Dong, Guro-Gu, Seoul (KR)
(74) Representative: Gille Hrabal Struck Neidlein Prop Roos

(57) **Abstract**

Disclosed are an air conditioner and a method for controlling the operation thereof. To this end, an air conditioner includes: a thermostat; a first temperature detecting means for detecting a temperature of the air sucked into an indoor heat exchanger; a second temperature detecting means for detecting an outdoor temperature; a control means for generating a signal for controlling the operation of an indoor fan on the basis of an indoor temperature detected by the thermostat, an air temperature detected by the first temperature detecting means and an outdoor temperature detected by the second detecting means; and an indoor fan rotated according to a signal generated by the control means.

## Description

### BACKGROUND OF THE INVENTION

### 1. Field of the Invention

The present invention relates to an air conditioner, and particularly, to an air conditioner and a method for controlling operation thereof.

### 2. Description of the Background Art

In general, a unitary air conditioner employs a central cooling and heating system in which cool air or warm air is made at one place by using a heating and cooling apparatus provided in a factory, an office, a hotel, a house or the like, and is supplied to a zone to be cooled or heated through a duct provided at a wall or the like in a building.

In the unitary air conditioning system, to independently supply the cool or warm air to individual zones by distinguishing a zone requiring cooling or heating and a zone which does not so, a zone controller is installed commonly at the middle of a duct, or a plurality of cooling or heating apparatuses are individually installed according to the number of zones to be cooled or heated.

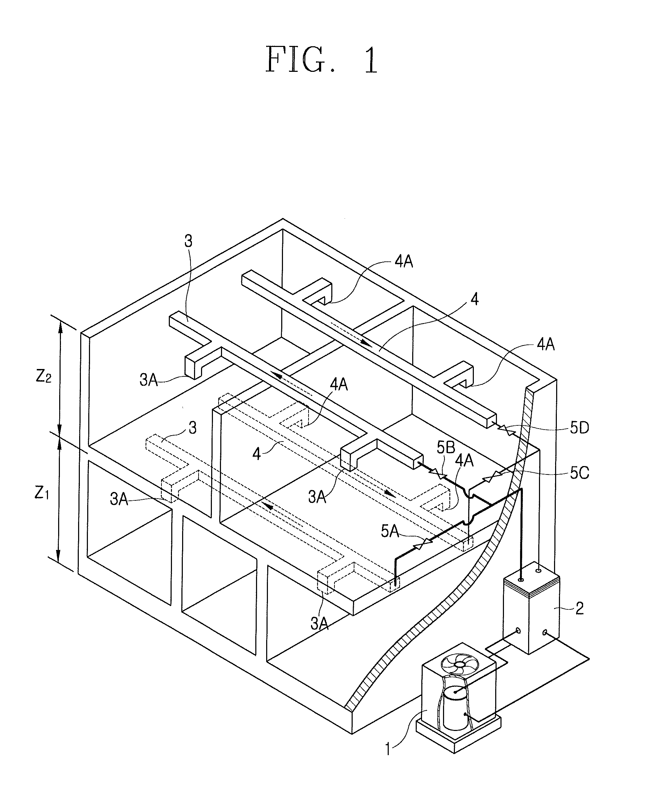

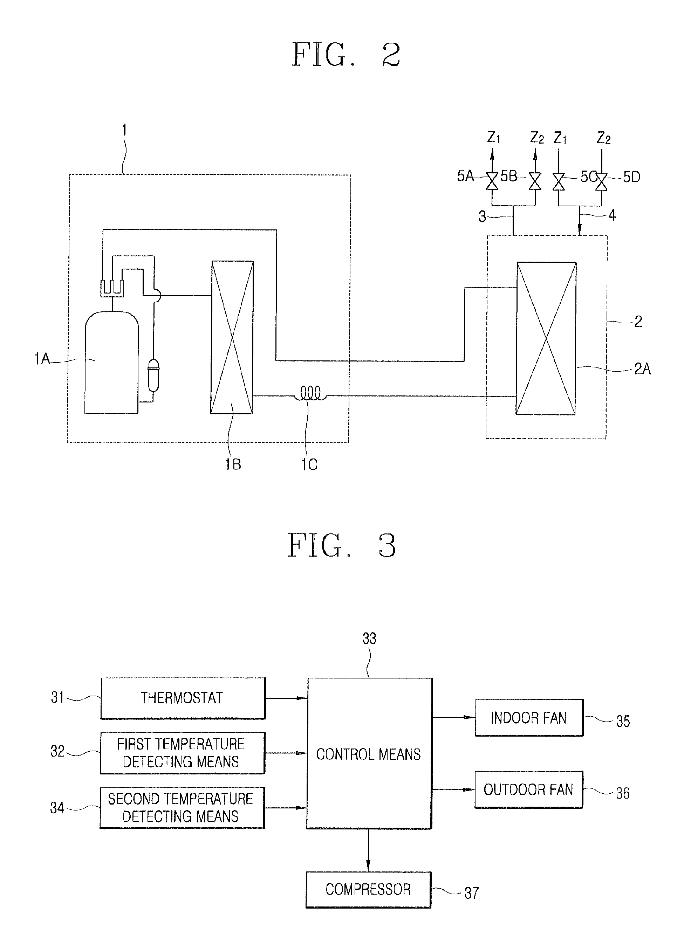

Figures 1 and 2 are a schematic view and a block diagram showing one example of an air conditioner in accordance with the conventional art.

As shown in Figures 1 and 2, the air conditioner in accordance with the conventional art includes: one outdoor unit 1 fixedly installed outside a building (two-story building of Figure 1); an indoor heat exchanger 2A connected to an outdoor heat exchanger 1B in the outdoor unit by a refrigerant pipe and fixedly installed at a basement or an annex of the building; a supply duct 3 and a return duct 4 respectively connected to a supply opening and a return opening of an indoor unit 2 and separately installed at a wall of each story of the building; and a zone controller 5A ~ 5D installed at the middle of the supply duct 3 and the return duct 4, for controlling a supply and a return of the air for each zone.

The outdoor unit 1 includes: at least one compressor 1A installed inside a case of the outdoor unit 1, for compressing a refrigerant gas; an outdoor heat exchanger 1 B connected to the compressors 1A by a refrigerant pipe, for condensing a refrigerant gas (in cooling operation) or absorbing latent heat (in heating operation); an expander 1C connected to the outdoor heat exchanger 1B, for reducing the pressure of the refrigerant gas and expanding the refrigerant gas; and an outdoor fan (not shown) for supplying the ambient air to the outdoor heat exchanger 1 B to improve heat exchange performance of the outdoor heat exchanger 1 B.

The indoor unit 2 includes: an indoor heat exchanger 2A connected to the other end of the expander 1C which is connected to one end of the outdoor heat exchanger 1 B; and a supply fan (not shown) positioned under the indoor heat exchanger 2A, for introducing the cool or warm air to the supply duct 3. A rough "U"-shaped air passage is formed at a case of the indoor unit 2 so that the indoor heat exchanger 2A and the supply fan (not shown) in the indoor unit receive the air. The supply duct 3 is connected to a supply side of the air passage of the indoor unit case, and the return duct 4 is connected to its return side of the indoor unit case.

As described above, the supply duct 3 connected to the supply opening of the indoor unit 2 and the return duct 4 connected to the return opening are separately installed at a corresponding zone (Z1, Z2) where the cool or warm air is supplied or exhausted. A discharge opening 3A for supplying the cool or warm air to the corresponding zone (Z1, Z2) is formed at the supply duct 3, and a suction opening 4A for sucking the indoor air of the corresponding zone (Z1, Z2) to circulate the indoor air is formed at the return duct 4.

The zone controller 5 is a kind of valve 5A~5D for selectively supplying the cool or warm air to each corresponding zone (Z1, Z2), wherein the valves are installed at the middle of the supply duct 3 and the middle of the return duct 4 laid in the corresponding zone (Z1, Z2). The zone controller is automatically turned ON/OFF by being connected to a control unit (not shown) that detects a temperature, humidity or the like of the corresponding zone (Z1, Z2) and compares the detected value with a preset value, or is manually turned ON/OFF.

The operation of the air conditioner according to the conventional art having such a structure will now be described.

In case of two-story building, if a load size detected from each zone (Z1, Z2) is greater than a preset value, the cool or warm air is supplied to each zone through the supply duct 3 of each zone. In contrast, if only the load size of one of the corresponding zones (Z1, Z2) is greater than the preset valve, the cool or warm air is supplied only to the one zone through the supply duct 3 of the corresponding zone.

For example, when an air conditioner using a heat pump type freezing cycle is in cooling operation, the compressors 1A of the outdoor unit 1 are driven, to compress a refrigerant gas, and the compressed refrigerant gas is condensed in the outdoor heat exchanger 1B of the outdoor unit 1 and passes through the expander 1C. Thereafter, the refrigerant gas having passed through the expander 1C carries out heat-exchange with the air sucked into the air passage through the return duct 4 while passing through the indoor heat exchanger 2A of the indoor unit 2, thereby changing the sucked air into the cool air. The cool air moves to the supply duct 3 through the supply opening by a supply fan (not shown). At this time, if all load sizes of the zones (Z1, Z2) are greater than the preset value, each zone controller 5A~5D is automatically turned ON by the control unit or manually turned ON by manipulation of a user. Thus, the cool air moves to the supply duct 3, and is discharged through the discharge opening 3A formed at the supply duct, thereby cooling each zone.

In contrast, when the air conditioner using a heat pump type freezing cycle is in cooling operation, if the load size is greater than the preset value in only one of the zones (Z1 and Z2), only a zone controller of the one zone where the load size is greater than the preset value is automatically or manually opened. Thus, the cool air moves to the supply duct 3 of the zone where the load size is greater than the preset value, and is discharged through the discharge opening 3A formed at the supply duct, thereby cooling the zone where the load size is greater than the preset value.

Meanwhile, in heating operation, the air conditioner is operated in the same manner as the cooling operation, except that the circulation of a refrigerant is carried out in reverse order according to the heat pump type freezing cycle.

Here, in the air conditioner in accordance with the conventional art, an outdoor unit and an indoor unit are controlled only on the basis of a set temperature desired by a user and an indoor temperature value which are detected by a thermostat positioned in the room. Namely, the indoor unit and the outdoor unit carry out minimum operation or maximum operation by the information calculated only on the basis of the set temperature and the indoor temperature value. Accordingly, the air conditioner in accordance with the conventional art has only two compression capacities, namely, a compression capacity in the minimum operation and a compression capacity in the maximum operation. Here, the two compressors have different compression capacities, and the minimum operation refers to the operation carried out by only one compressor having a small capacity, of the two compressors, and the maximum operation refers to the operation carried out by both the two compressors.

However, the air conditioner in accordance with the conventional art has following problems.

The conventional air conditioner controls the outdoor unit and the indoor unit on the basis of only a value detected by a thermostat, and controls compressors so that the compressors output a compression capacity according to the minimum operation mode or the maximum operation mode. In other words, a temperature of the air introduced into the indoor heat exchanger and an outdoor temperature are not considered. For this reason, the indoor unit and the outdoor unit cannot be controlled and operated in an optimal condition, and provide a relatively degraded load response performance.

### SUMMARY OF THE INVENTION

Therefore, an object of the present invention is to provide an air conditioner and a method for controlling operation thereof capable of controlling and operating an outdoor unit and an indoor unit in an optimal state by controlling the outdoor unit and the indoor unit on the basis of not only an indoor temperature but also a temperature of the air sucked into an indoor heat exchanger and an outdoor temperature.

Another object of the present invention is to provide an air conditioner and a method for controlling operation thereof capable of improving a load response performance by allowing compressors to output a compression capacity according to three types of operation modes.

To achieve these and other advantages and in accordance with the purpose of the present invention, as embodied and broadly described herein, there is provided an air conditioner comprising: a thermostat; a first temperature detecting means for detecting a temperature of the air sucked into an indoor heat exchanger; a second temperature detecting means for detecting an outdoor temperature; a control means for generating a signal for controlling the operation of an indoor fan on the basis of an indoor temperature detected by the thermostat, an air temperature detected by the first temperature detecting means and an outdoor temperature detected by the second detecting means; and an indoor fan rotated according to a signal generated by the control means.

To achieve these and other advantages and in accordance with the purpose of the present invention, as embodied and broadly described herein, there is provided a method for controlling the operation of an air conditioner comprising: detecting a temperature of the air sucked into an indoor heat exchanger, an outdoor temperature and an indoor temperature; analyzing the air temperature, the indoor temperature and the outdoor temperature in an indoor unit; and controlling the operation of an indoor fan on the basis of the analysis result.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a unit of this specification, illustrate embodiments of the invention and together with the description serve to explain the principles of the invention.

In the drawings:
Figure 1 is a schematic view showing an air conditioner in accordance with the conventional art;
Figure 2 is a block diagram showing a system of the air conditioner in accordance with the present invention;
Figure 3 is a block diagram showing a structure of an air conditioner in accordance with the present invention;
Figure 4 is a flow chart showing a method for controlling the air conditioner in accordance with the present invention; and
Figure 5 is a view showing a table for explaining operational conditions of an indoor fan, an outdoor fan and compressors in accordance with the present invention.

### DETAILED DESCRIPTION OF THE PREFERRED EMBODIMENTS

Reference will now be made in detail to the preferred embodiments of the present invention, examples of which are illustrated in the accompanying drawings.

Preferred embodiments of an air conditioner and a method for controlling its operation capable of controlling and operating an indoor unit and an outdoor unit in an optimal state and improving a load response performance of an air conditioner by controlling the indoor fan and the outdoor fan on the basis of not only an indoor temperature but also a temperature of the air sucked into an indoor heat exchanger and an outdoor temperature and by allowing compressors having different capacities to output a compression capacity according to three types of modes, will now be described with reference to Figures 3 to 5.

Figure 3 is a block diagram showing a structure of an air conditioner in accordance with the present invention.

As shown, the air conditioner in accordance with the present invention includes: a thermostat 31; a first temperature detecting means 32 for detecting a temperature of the air sucked into an indoor heat exchanger; a second temperature detecting means 32 for detecting an outdoor temperature; a control means 33 for generating a signal for controlling operation of an indoor fan on the basis of an indoor temperature detected by the thermostat, an air temperature detected by the first temperature detecting means and an outdoor temperature detected by the second detecting means; and an indoor fan 35 rotated according to the signal generated by the control means.

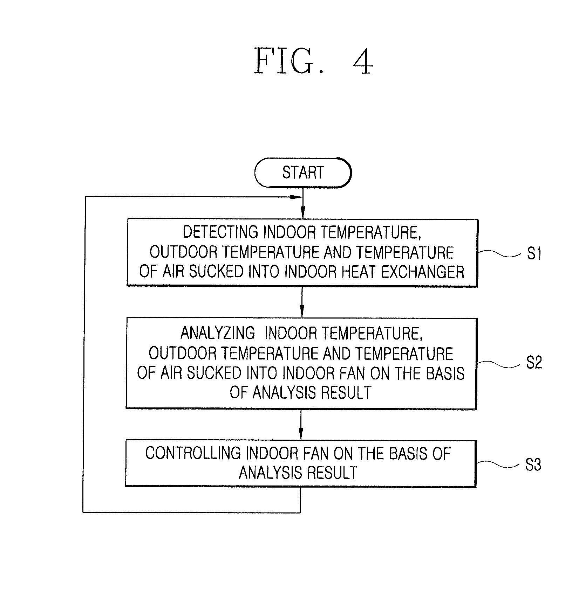

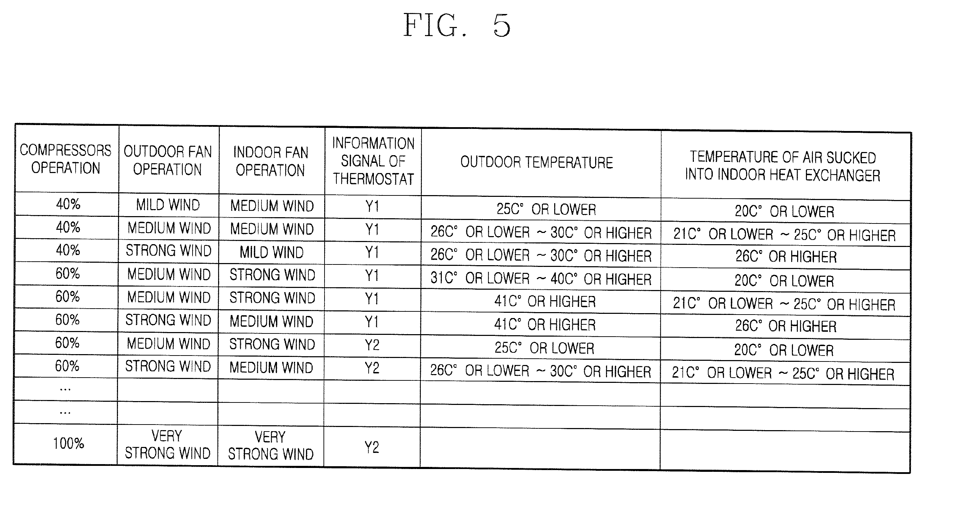

A method for controlling operation of the air conditioner in accordance with the present invention having such a structure will now be described in detail with reference to Figures 4 and 5.

Figure 4 is a flow chart showing a method for controlling the operation of the air conditioner in accordance with the present invention.

As shown, the method for controlling the operation of the air conditioner in accordance with the present invention includes: detecting a temperature of the air sucked into the indoor heat exchanger, an outdoor temperature and an indoor temperature (S1); analyzing the air temperature, the indoor temperature and the outdoor temperature in the indoor unit (S2); and controlling the operation of the indoor fan on the basis of the analysis result (S3).

The method for controlling the operation of the air conditioner in accordance with the present invention will now be described.

First, the thermostat 31 is installed in a room, and detects a desired temperature set by a user, an indoor air temperature or the like. Then, on the basis of the detected temperature value, the thermostat provides to the control means 33 information indicating a degree of opening of a valve of an expander, through which a refrigerant supplied from the outdoor unit to the indoor unit passes. The first temperature detecting means 32 is installed at the indoor heat exchanger, detects a temperature of the air sucked into the indoor heat exchanger and provides the detected temperature value to the control means 33. The second temperature detecting means 34 is installed at an outdoor unit, detects an outdoor temperature and provides the detected outdoor temperature value to the control means 33 (S1).

In the indoor unit, the control means 33 analyses the information provided from the thermostat 31, the air temperature provided from the first temperature detecting means 32, and the outdoor temperature provided from the second temperature detecting means 34, and generates a signal for controlling the operation of the indoor fan on the basis of the analysis result (S2). The generated signal is provided to the indoor fan 35.

The indoor fan 35 is rotated at a predetermined speed by a signal that is provided from the control means 33 to control the operation of the indoor fan (S3). Namely, unlike the conventional art, the control means 33 controls the indoor fan on the basis of not only the indoor temperature but also the temperature of the air sucked into the indoor heat exchanges and the outdoor temperature. Accordingly, the indoor unit can be controlled and operated in an optimal condition.

In the outdoor unit 33, the control means 33 generates a signal for controlling the operation capacity of the compressors and a signal for controlling the operation of the outdoor fan on the basis of not only the indoor temperature but also the temperature of the air sucked into the indoor heat exchanger and the outdoor temperature. And, the control means 33 provides the signal for controlling the operation of the outdoor fan to the outdoor fan 36, and also provides the signal for controlling the operation capacity of the compressors to the compressors 37.

The outdoor fan 36 is rotated at a predetermined speed by the signal that is provided from the control means 33 to control the operation of the outdoor fan, and the compressors 37 output the compression capacity by the signal that is provided from the control means 33 to control the operation capacity of the compressors.

Here, the compressors 37 are a first compressor and a second compressor which have different capacities, and the control means 33 analyses the indoor temperature, the temperature of the air sucked into the indoor heat exchanger, and the outdoor temperature. On the basis of the analysis result, the control means 33 controls the compressors 37 to turn ON/OFF, OFF/ON or ON/ON the first compressor and the second compressor according to three types of modes. For example, in case that a capacity ratio of the first compressor to the second compressor is 4:6, the control means 33 may operate only the first compressor having a small capacity, thereby allowing the compressors 36 to output 40% of the entire compression capacity of the compressors 37. Here, turning ON only the compressor having a small capacity, of the compressors 37 is the minimum operation, the first mode. Also, in such case, the control means 33 may operate only the second compressor having a large capacity, thereby allowing the compressors to output 60% of the entire compression capacity of the compressors 37. Here, turning ON only the compressor having a large capacity, of the compressors 37 is the intermediate operation, the second mode. By operating both the first compressor and the second compressor, the control means 33 may control the compressors 37, allowing the compressors to output 100% of the entire compression capacity of the compressors 37. Here, turning on every compressor 37 is the maximum operation, the third mode. Namely, the control means 33 controls the compressors 37 according to those three types of modes.

A method for controlling the operation of the air conditioner in accordance with the present invention will now be described with a specific example. In Figure 5, depicted are examples of conditions for operating the compressors 37, the indoor fan 35, and the outdoor fan 36 on the basis of an information signal generated based on a desired temperature of a user and an indoor temperature detected by a thermostat, an outdoor temperature, and a temperature of the air sucked into the indoor heat exchanger. The compressors 37 include a first compressor and a second compressor are provided, and a capacity ratio of the first compressor to the second compressor is 4:6.

Figure 5 is a view showing a table for describing conditions for operating the indoor fan, the outdoor fan and the compressors in accordance with the present invention. Here, Y1 and Y2 are information signals that the thermostat outputs to control a degree of opening of a valve of the expander, and the compressors 37 according to the present invention can output 40%, 60% and 100% of the entire compression capacity according to three types of modes. The output fan and the indoor fan are operated by four types of operation modes: mild wind, medium wind, strong wind and very strong wind.

As shown in Figure 5, when the 2^{nd} line of the table is compared to the 3^{rd} line, although the signals (Y1) of the thermostat are the same, the operation modes of the outdoor fan are the mild wind mode and the medium wind mode, respectively because of different outdoor temperatures and different temperatures of the air sucked into the indoor heat exchanger. In addition, when the 8^{th} line of the table is compared to the 9^{th} line, although the signals (Y2) of the thermostat are the same, the operation modes of the outdoor fan are the strong wind mode and the medium wind mode, respectively, and the operation modes of the indoor fan are the strong wind mode and the moderate wind mode, respectively, because of different outdoor temperatures and different temperatures of the air sucked into the indoor heat exchanger are different. Namely, as known through the table, even if the signals of the thermostat indicating the indoor temperature are the same, if the outdoor temperatures and the temperatures of the air sucked into the indoor heat exchanger are different, the operation modes of the compressors, the outdoor fan and the indoor fan become different.

As so far described, in the air conditioner in accordance with the present invention, the indoor unit and the outdoor unit can be controlled and operated in an optimal state by controlling the indoor fan and the outdoor fan on the basis of not only the indoor temperature but also the temperature of the air sucked into the indoor heat exchanger and the outdoor temperature.

In addition, the air conditioner in accordance with the present invention can desirably improve a load response performance by controlling the compressors to allow the compressors including the first compressor and the second compressor having different capacities to output a compression capacity according to three types of modes.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. An air conditioner comprising:
a thermostat;
a first temperature detecting means for detecting a temperature of the air sucked into an indoor heat exchanger;
a second temperature detecting means for detecting an outdoor temperature;
a control means for generating a signal for controlling the operation of an indoor fan on the basis of an indoor temperature detected by the thermostat, an air temperature detected by the first temperature detecting means and an outdoor temperature detected by the second detecting means; and
an indoor fan rotated according to a signal generated by the control means.

2. The air conditioner of claim 1, further comprising:
a control means for generating a signal for controlling the operation of compressors and an outdoor fan on the basis of an indoor temperature detected by the thermostat, an air temperature detected by the first temperature detecting means and an outdoor temperature detected by the second detecting means.

3. The air conditioner of claim 2, further comprising:
compressors, wherein output of a compression capacity of the compressors is varied according to a signal for controlling the operation of the compressors; and
an outdoor fan rotated according to a signal for controlling the operation of the outdoor fan.

4. The air conditioner of claim 1, wherein the control means receives an indoor temperature value detected by the thermostat, an air temperature value detected by the first temperature detecting means and an outdoor temperature value detected by the second temperature detecting means.

5. The air conditioner of claim 2, wherein the control means receives an indoor temperature value detected by the thermostat, an air temperature value detected by the first temperature detecting means and an outdoor temperature value detected by the second temperature detecting means, and outputs a signal for controlling the operation of the compressors and the outdoor fan to the compressors and the outdoor fan.

6. The air conditioner of claim 2, wherein the compressors are a first compressor and a second compressor having different compression capacities.

7. The air conditioner of claim 6, wherein the control means controls the first compressor and the second compressor to turn ON/ON, ON/OFF or OFF/ON the first compressor and the second compressor according to a signal for controlling the operation of the compressors.

8. A method for controlling the operation of an air conditioner comprising:
detecting a temperature of the air sucked into an indoor heat exchanger, an outdoor temperature and an indoor temperature;
analyzing the air temperature, the indoor temperature and the outdoor temperature in an indoor unit; and
controlling the operation of an indoor fan on the basis of the analysis result.

9. The method of claim 8, further comprising:
controlling the operation of compressors and an outdoor fan in an outdoor unit on the basis of the analysis result.

10. The method of claim 9, wherein the compressors are a first compressor and a second compressors having different capacities.

11. The method of claim 10, wherein the controlling comprises:
controlling the first compressor and the second compressor to turn ON/ON, ON/OFF or OFF/ON the first compressor and the second compressor on the basis of the analysis result.
